# FASCICULE DE BREVET EUROPEEN

(11) **EP 1 330 372 B1**
(45) Date de publication et mention de la délivrance du brevet: **25.08.2004**
(21) Numéro de dépôt: 01988659.7
(22) Date de dépôt: 22.10.2001
(51) Int. Cl.: B60C 23/04

(54) **SYSTEME DE SURVEILLANCE DE PRESSION A FAIBLE CONSOMMATION DE COURANT POUR PNEUMATIQUE**
REIFENDRÜCKÜBERWACHUNGSSYSTEM MIT NIEDRIGEM STROMVERBRAUCH
LOW-POWER CONSUMPTION SYSTEM FOR MONITORING PRESSURE IN A TYRE

(30) Priorité: 23.10.2000 FR 0013773
(43) Date de publication de la demande: 30.07.2003
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: BOULOT, Jean-Francis, F-63430 Pont du Château (FR)
(74) Mandataire: Dequire, Philippe
(86) Numéro de dépôt international: PCT/EP2001/012166
(87) Numéro de publication internationale: WO 2002/034553

(56) Documents cités:
- DE-A- 19 917 360

## Description

La présente invention concerne un système de surveillance de pression à faible consommation de courant pour pneumatique.

De plus en plus, les constructeurs automobiles et les fabricants de pneumatiques tentent de prendre en compte les exigences de sécurité, de confort et de commodité sans cesse grandissante des usagers modernes de la route. Ce phénomène se manifeste par exemple par la banalisation de nombreux types de dispositifs pratiquement inexistants il y a à peine quelques années, comme par exemple les coussins de sécurité, les freins de type ABS, les dispositifs ESP, etc. Plus récemment, des dispositifs de mesure et/ou de surveillance de la pression des pneumatiques sont apparus. En informant de façon simple, fiable et régulière le conducteur sur le niveau de gonflage des pneumatiques de son véhicule, on contribue à en améliorer la sécurité, la consommation, à prolonger la vie des pneumatiques, etc. De tels systèmes comportent en général au moins un capteur de pression de type connu en soi.

Ainsi, on connaît par exemple certains types de capteurs de pression (par exemple de type capacitif ou résistif), permettant de mesurer la pression d'un pneumatique à un temps donné. En général, de tels capteurs nécessitent une alimentation électrique pour effectuer les mesures et transmettre les informations recueillies. De manière connue, on équipe la roue d'une pile. Si on souhaite effectuer des mesures de pression fréquentes, voire en temps continu, ce qui est indispensable si on souhaite par exemple détecter une crevaison de pneumatique, la pile doit alors être facilement remplaçable, puisque le capteur sollicite considérablement la pile, qui se décharge rapidement. Le remplacement doit pouvoir être effectué de façon simple, rapide et peu coûteuse.

Dans un tel contexte, on rencontre régulièrement des problèmes de fiabilité dus aux contacts de la pile qui doivent supporter un environnement des plus sévères.

Les contacts se dégradent et l'alimentation en énergie électrique risque de devenir aléatoire ou instable, voire complètement interrompue.

Pour pallier ce type de situation, on utilise des piles non remplaçables, qui peuvent être intégrées de façon définitives au circuit électrique, par exemple par soudage. On obtient alors une plus grande fiabilité au niveau de l'alimentation en énergie. Par contre, si on veut éviter que la durée de vie de la pile soit trop courte, il est fortement souhaitable d'éviter que le système de surveillance de pression soit alimenté de façon continue, afin d'éviter une consommation trop rapide de l'énergie disponible dans la pile. On recherche donc divers moyens pour faire en sorte que le capteur ne fonctionne pas de façon continue, mais plutôt lorsque cela est véritablement nécessaire. Ainsi, lorsque le véhicule est à l'arrêt, il est inutile de procéder à des mesures continues. Une solution connue à ce problème consiste à utiliser un interrupteur centrifuge, permettant de déconnecter le capteur lorsque le véhicule est à l'arrêt. Un tel interrupteur centrifuge, comme par exemple une bille à ressort, est utilisé aujourd'hui afin de déceler le contexte dans lequel le véhicule se trouve (mobile ou immobile). Tout roulement à une vitesse par exemple de l'ordre de 3 à 5 km/h pendant quelques secondes permet de réactiver le capteur. Un tel type d'interrupteur possède cependant plusieurs limitations. En effet, l'interrupteur centrifuge est coûteux, de durabilité limitée et peu précis, de sorte qu'il faut souvent rouler 200 ou 300 m ou même plus avant de réamorcer le mode de mesure normal. Dans un tel cas, il est probable qu'un conducteur soit averti d'un sous-gonflage ou même d'une crevaison alors qu'il a quitté le stationnement et se trouve à présent sur la voie publique. Il est évidemment fortement souhaitable d'éviter ce genre de situation.

La présente invention permet de pallier ce type de problème. Pour ce faire, l'invention propose un système de surveillance de pression de pneumatique, comprenant :
- un capteur de mesure de pression en communication fluidique avec la pression ambiante du pneumatique ;
- un détecteur de bruit, susceptible de percevoir le bruit produit par le véhicule lors de sa mise en marche;
- un module de gestion, susceptible de recevoir et de traiter les informations fournies par le capteur de pression d'une part et d'autre part par le détecteur de bruit de façon à ce que lorsque le véhicule est à l'arrêt, le capteur de pression fonctionne en mode « économie » ; lorsque le véhicule est en marche, le capteur de pression fonctionne en mode « normal ».

Grâce au détecteur de bruit, il est possible de supprimer l'interrupteur centrifuge préalablement décrit. On adjoint de préférence un filtre passe-haut au système afin de conserver uniquement les fréquences par exemple supérieures à 10 ou 100 Hz.

Le détecteur de bruit est de préférence type piézo-électrique.

Il s'agit d'une technologie éprouvée en soit, fiable, précise, permettant des temps de réaction très courts, comme par exemple inférieur à 100 ms. Par ailleurs, une des principales caractéristiques des capteurs de type piézo-électrique consiste à pouvoir fonctionner sans alimentation. Plus particulièrement, une déformation de la membrane constituée d'un matériau de type piézo-électrique permet de générer un micro-courant. Ce courant est ensuite utilisé par un circuit de lecture et de traitement ou d'analyse du signal. Seul le module électronique nécessite une alimentation, mais de très faible puissance. Une pile longue durée peut donc être prévue.

De manière avantageuse, le détecteur de bruit est également un détecteur de variation de pression.

En plus des fonctions associées au fait de détecter les variations de pression, par exemple pour agir en tant que détecteur d'éclatement, ou pour commander le rythme des itérations d'un capteur de mesure de pression, le capteur de variation de pression de type piézo-électrique agit comme un microphone qui peut aisément détecter avec une grande précision le passage en mode roulage. La détection de toute anomalie se fait alors très rapidement, le conducteur peut en être informé bien avant de quitter le parking. Eventuellement même avant d'entrer en mode roulage, puisque même le démarrage du moteur peut être détecté par le détecteur de type piézo-électrique, ce qui permet de réagir avant même que le véhicule ne soit déplacé. Selon un mode de réalisation avantageux de l'invention, la consommation électrique du détecteur de type piézo-électrique est sensiblement nulle. On économise de ce fait l'énergie de la pile.

Dans un exemple avantageux, le détecteur de bruit est sensible aux bruits produits par un déplacement angulaire d'une roue à laquelle il est associé.

Selon un autre exemple avantageux, le détecteur de bruit est sensible aux bruits produits par le moteur du véhicule.

Le mode « économie » est de préférence celui dans lequel l'intervalle de temps entre les mesures effectuées par le capteur de pression est sensiblement plus long qu'en mode « normal ».

En mode « économie », il est possible de diminuer la fréquence de mesure de la pression des pneumatiques. Le système de surveillance est alors alimenté seulement à des intervalles telles que toutes les 2, 3, 5, 30, 60, 120 minutes, etc. Dès que le roulage reprend, on revient en mode de mesure « normal ».

Selon un mode de réalisation avantageux de l'invention, lors du passage du mode « économie » vers le mode « normal », une période transitoire de mode de mesure « accéléré », dans lequel l'intervalle de temps entre les mesures effectuées par le capteur de pression est sensiblement plus court qu'en mode « normal », est prévue.

Le système de surveillance de pression de pneumatique comporte un moyen de transmission permettant l'acheminement des données de la roue sur laquelle le capteur et le détecteur sont avantageusement disposés vers la portion non rotative du véhicule. Ce moyen de transmission comporte de préférence une ou plusieurs antennes.

Le moyen de transmission peut être de type transpondeur ou encore de type émetteur/récepteur radio.

Le détecteur de variation de pression est avantageusement susceptible d'interagir sur un autre élément coopérant soit électriquement ou mécaniquement avec ledit détecteur.

L'intervalle de temps à l'intérieur duquel il est souhaitable que le dispositif réagisse correspond avantageusement à un temps très court, comme par exemple un intervalle dans lequel le temps t tends vers 0 seconde. Plus le temps est court, plus le dispositif peut contribuer à améliorer la sécurité.

Le signal transmis par le module de gestion est avantageusement de type électrique ou radio.

Par exemple, le détecteur de bruit et de variation de pression comprend un boîtier muni de deux chambres sensiblement isolées l'une de l'autre et séparées par une membrane de type piézo-électrique, une première chambre étant soumise à une pression de référence, la seconde étant susceptible d'être en communication fluidique avec l'ambiance du milieu dans lequel on souhaite effectuer la surveillance, ladite membrane étant déformable sous l'action d'une variation de la pression de ladite ambiance, les déformations ainsi produites permettant de générer un signal électrique dont l'intensité est en relation avec l'importance de la déformation.

La pression de référence de la chambre de référence est sensiblement constante et ne varie pas lors d'une variation de la pression de l'ambiance sous surveillance, ce qui permet au différentiel de pression entre les chambres de varier, cette dernière variation donnant lieu à génération d'un signal de type piézo-électrique.

De manière avantageuse, la membrane est adaptée pour réagir avec une amplitude et/ou une vitesse de déformation en fonction du niveau et/ou du taux de la variation de la pression.

De manière avantageuse, la pression de référence correspond au vide.

Le capteur est avantageusement disposé de façon à ce que l'ambiance du milieu dans lequel on effectue la surveillance corresponde à la pression à l'intérieur de la cavité d'un pneumatique. Par exemple, le capteur peut être disposé directement dans ladite cavité ; autrement, une canalisation peut permettre l'acheminement de l'ambiance jusqu'au capteur disposé par exemple dans la roue.

Le dispositif selon l'invention est avantageusement prévu pour montage sur une roue ; il est alors avantageux de prévoir au moins un moyen de transmission des données vers une partie non rotative du véhicule, afin d'assurer que les signaux puissent transiter de la roue vers le véhicule. Le véhicule peut disposer d'au moins un moyen de réception des données.

L'invention prévoit également un pneumatique comportant un détecteur de bruit tel que décrit ci-dessus.

L'invention prévoit également une jante comportant un détecteur de bruit tel que décrit ci-dessus.

D'autres caractéristiques et avantages de l'invention apparaîtront à la lecture de la description du dispositif de détection d'éclatement conforme à l'invention, donnée à titre non limitatif, en se référant aux figures en annexe, dans lesquelles:
la figure 1 présente une vue en coupe schématique d'un capteur de variation de pression selon l'invention ;
la figure 2 présente un diagramme illustrant des exemples de signaux associés à certains types de variations de pression susceptibles de se présenter au niveau des pneumatiques d'un véhicule.
la figure 3 présente un organigramme de la surveillance d'un pneumatique avec un système de surveillance selon l'invention ;
la figure 4 illustre un schéma fonctionnel d'un système de mesure et /ou de surveillance de la pression des pneus d'un véhicule, comportant un capteur de pression et un détecteur de variation de pression.

La figure 4 illustre un schéma fonctionnel d'un système de surveillance de la pression de pneumatique 1 selon l'invention. Il comporte un capteur de pression 7, un capteur de variation de pression 2, tel que décrit ci-après. Un module de gestion 3, coopérant électriquement ou mécaniquement avec le capteur 2 est prévu. Une pile 4 permet l'alimentation du module 3 et du capteur 7, et éventuellement du capteur 2, mais un type avantageux de capteur 2 selon l'invention ne nécessite pas d'alimentation, ce qui permet d'économiser la pile 4. De préférence, afin de permettre la transmission des données depuis la roue du véhicule vers le véhicule, on prévoit avantageusement un module de transmission 5. Il peut s'agir par exemple d'un émetteur (de préférence HF), d'un transpondeur, etc. Une éventuelle antenne 6 complète le dispositif de la figure 4.

Ce dispositif est prévu pour montage sur une roue, soit sur la jante ou sur le pneumatique. Il peut également être intégré à l'un ou l'autre de ces éléments, comme par exemple moulé dans une parois du pneumatique. Pour cette raison, on utilise de préférence un détecteur de variation de pression 2 ne nécessitant pas d'alimentation, afin de permettre une durée de vie de la pile 4 qui puisse dans la mesure de possible correspondre à celle du pneumatique, de la roue ou du véhicule. La pile 4 est alors intégrée au dispositif 1 ; elle peut par exemple être soudée. De cette façon, on évite les problèmes fréquents de contacts inhérents aux piles remplaçables.

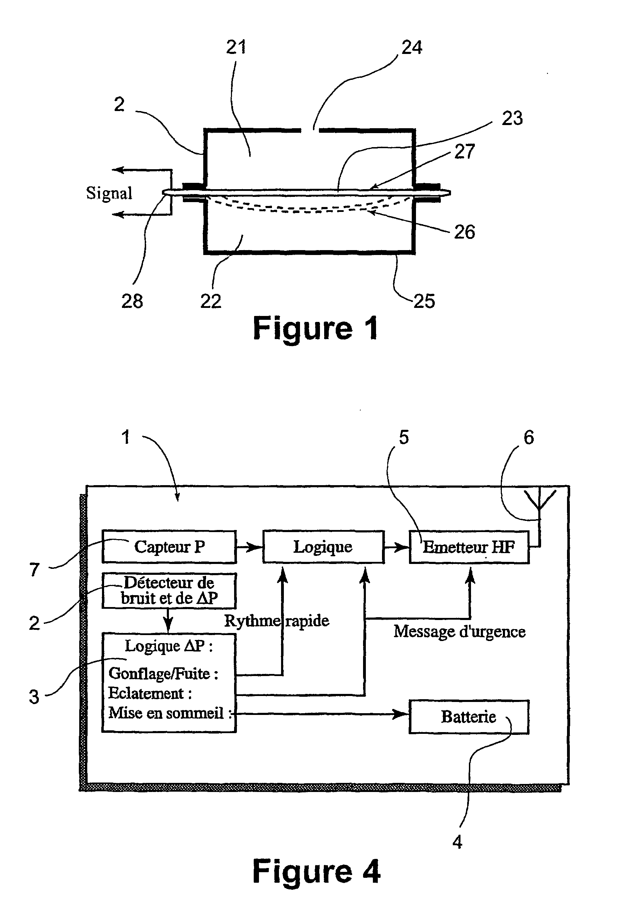

La figure 1 illustre un type particulièrement avantageux de détecteur de variation de pression 2, de type piézo-électrique. Il comprend un boîtier 25, pourvu de deux chambres 21 et 22, séparées et sensiblement isolées l'une de l'autre par une membrane 23 de type piézo-électrique. Une ouverture 24 permet d'établir une communication fluidique entre une première chambre 21 du détecteur, et le milieu ou ambiance que l'on souhaite surveiller. La chambre 22 est soumise à une pression de référence, voire sans pression ou sous vide. Une sortie 28 électrique permet de transmettre le signal de faible courant généré pendant toute déformation de la membrane 23.

Dans le cas où la chambre 22 est sous vide, la membrane 23 présente en général une déformation concave ; elle est poussée vers la chambre 23 sous vide. Toute pression additionnelle provenant de l'orifice 24 contribue à déformer la membrane 23 qui occupera une position stabilisée comme par exemple 26. Une éventuelle chute de pression dans la chambre témoin 21 entraîne une nouvelle déformation de la membrane 23 qui tend alors à reprendre sa forme ou profil d'origine 27 (sensiblement plat). Lors du changement de courbure de la membrane 23, un faible courant est émis, en fonction de l'amplitude de la déformation et/ ou de la vitesse de déformation. Ainsi, un éclatement du pneumatique relié à la chambre 21 par l'orifice 24 entraîne une chute brutale et importante de la pression dans la chambre 21. La déformation de la membrane 23 d'un premier profil stabilisé vers un second profil stabilisé permet la génération d'un courant par la sortie électrique 28. Ce courant peut par la suite être reçu par un module de gestion 3 et traité de façon appropriée.

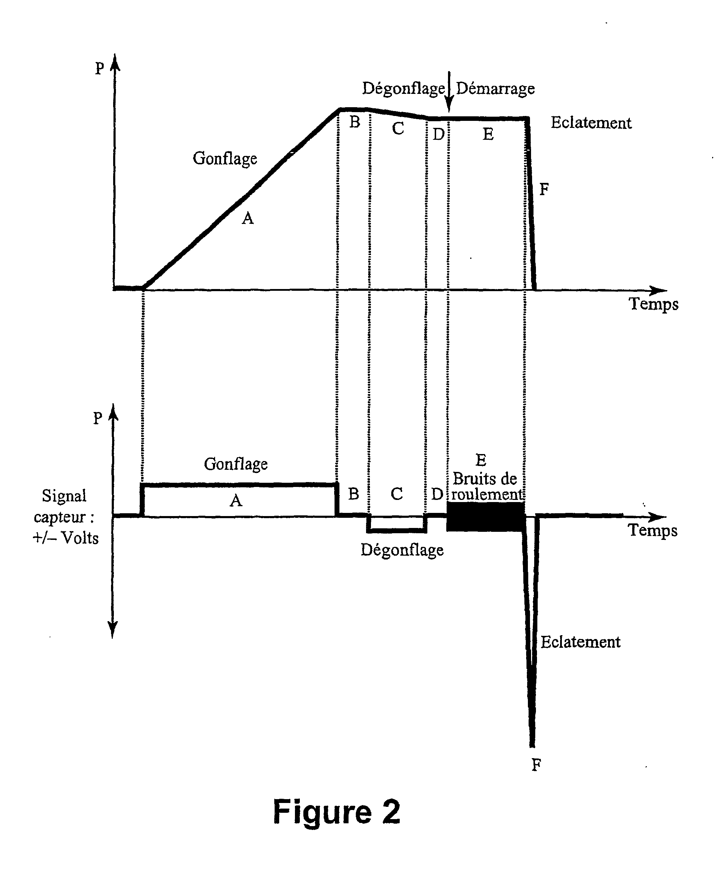

La figure 2 illustre des exemples de signaux susceptibles d'être générés par un détecteur de variation de pression 2 selon l'invention. La figure met en relation le phénomène physique présent et le signal correspondant du détecteur. Par exemple, en mode gonflage A, la pression augmente, donc varie. Cela occasionne la génération d'un signal par exemple positif et constant associé à une variation de pression faible, continue et régulière.

A pression constante, en B et D, aucun signal n'est généré puisque la membrane demeure fixe et ne change pas de profil.

Lors d'une diminution de pression, en C, un signal par exemple négatif et constant peut être associé à une faible diminution de pression, constante et régulière.

En F, le pneumatique éclate, ou subit une perte de pression très importante et rapide, permettant la génération d'un signal sous forme de « pointe », de faible durée, puisque la membrane du capteur est fortement déformée pendant un temps très court, le temps de passer d'un premier profil sensiblement stabilisé vers un autre profil sensiblement stabilisé.

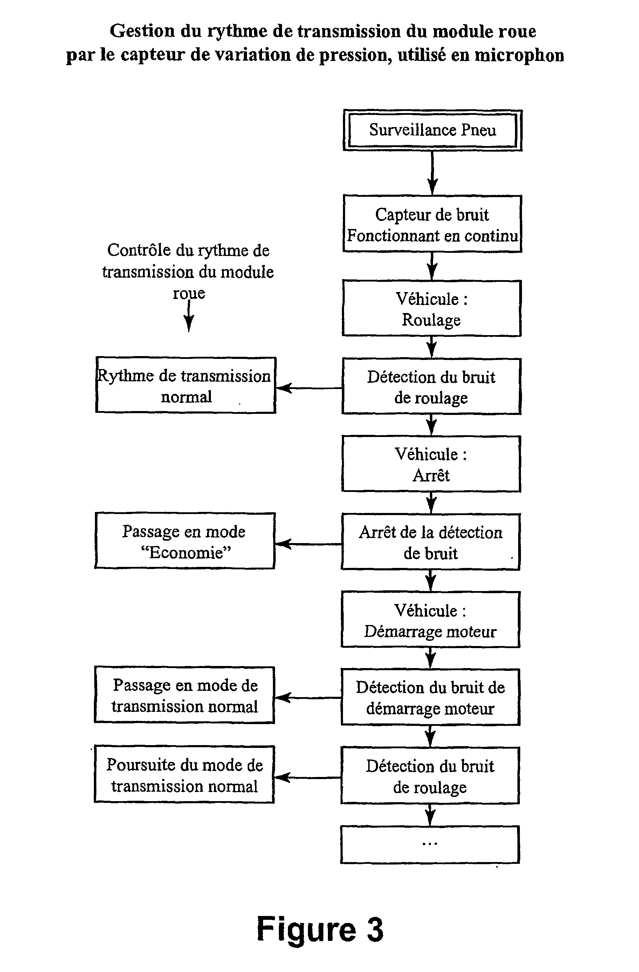

En E, la pression est stable et le véhicule se déplace. Le bruit de roulement peut être perçu par le détecteur, selon sa sensibilité. Il fonctionne alors comme un détecteur ou capteur de bruit ou microphone. La double fonction détecteur de variation de pression / détecteur de bruit de roulement est particulièrement avantageuse tel qu'illustré par le figure 3.

La figure 3 présente un schéma opératoire du mode de surveillance de pneumatiques, à l'aide d'un système de surveillance de pression selon l'invention. En mode de fonctionnement normal, les mesures du capteur de pression 7 sont effectuées par itérations, à des intervalles de temps donnés.

Afin de prolonger au maximum la durée de vie de la pile, on souhaite diminuer le nombre d'itérations pour un temps donné, dès qu'il n'est plus nécessaire de surveiller les pneumatiques de façon continue, typiquement lors de l'arrêt du véhicule, notamment pour un arrêt prolongé. A cette fin, le détecteur de bruit 2 surveille de façon continue le comportement sonore, au niveau du véhicule, et de préférence au niveau d'un ou plusieurs pneumatiques. Lorsque le véhicule est à l'arrêt, de façon générale, le niveau sonore diminue ou devient sensiblement nul. Le détecteur de bruit permet de percevoir cette situation. Le module de gestion 3 peut alors déclencher le mode « économie », dans lequel l'intervalle de temps entre les mesures effectuées est sensiblement plus long qu'en mode normal. Ce type de fonctionnement permet notamment d'économiser la pile. Dans la mesure où le détecteur de bruit est calibré pour détecter le bruit de fonctionnement du moteur, le passage en mode normal est effectué avant tout roulage. Ainsi, tout problème relié à une pression anormale est détecté avant de prendre la route. Si la calibration est prévue uniquement pour détecter le roulage des roues, celui-ci est susceptible d'être détecté dès les premiers déplacements angulaires, de façon à permettre de déceler tout problème de pression avant de prendre la route ou de rouler à vitesse élevée.

De manière avantageuse, lors du passage du mode « économie » vers le mode « normal », on prévoie une courte période transitoire de mode de mesure « accéléré », permettant de déceler très rapidement, voire sensiblement instantanément, toute anomalie au niveau de la pression d'un ou plusieurs pneumatiques.

## Revendications

1. Système de surveillance de pression de pneumatique, comprenant :
• un capteur de mesure de pression en communication fluidique avec la pression ambiante du pneumatique ;
• un détecteur de bruit, susceptible de percevoir le bruit produit par le véhicule lors de sa mise en marche ;
• un module de gestion, susceptible de recevoir et de traiter les informations fournies par le capteur de pression d'une part et d'autre part par le détecteur de bruit de façon à ce que lorsque le véhicule est à l'arrêt, le capteur de pression fonctionne en mode « économie » ; lorsque le véhicule est en marche, le capteur de pression fonctionne en mode « normal ».

2. Système de surveillance de pression de pneumatique selon la revendication 1, dans lequel le détecteur de bruit est de type piézo-électrique.

3. Système de surveillance de pression de pneumatique selon la revendication 2, dans lequel le détecteur de bruit est également un détecteur de variation de pression.

4. Système de surveillance de pression de pneumatique selon l'une des revendications 1 à 3, dans lequel le détecteur de bruit est sensible aux bruits produits par un déplacement angulaire d'une roue à laquelle il est associé

5. Système de surveillance de pression de pneumatique selon l'une des revendications 1 à 3, dans lequel le détecteur de bruit est sensible aux bruits produits par le moteur du véhicule.

6. Système de surveillance de pression de pneumatique selon l'une des revendications 1 à 5, dans lequel le mode « économie » est celui dans lequel l'intervalle de temps entre les mesures effectuées par le capteur de pression est sensiblement plus long qu'en mode « normal ».

7. Système de surveillance de pression de pneumatique selon l'une des revendications 1 à 6, dans lequel lors du passage du mode « économie » vers le mode « normal », une période transitoire de mode de mesure « accéléré », dans lequel l'intervalle de temps entre les mesures effectuées par le capteur de pression est sensiblement plus court qu'en mode « normal », est prévue.

## Patentansprüche

1. Reifendrucküberwachungssystem mit:
einem Sensor zum Messen des Druckes, der mit dem Umgebungsdruck des Reifens kommuniziert,
einem Geräuschdetektor zum Wahrnehmen von Geräuschen, die durch das Fahrzeug beim Starten erzeugt werden,
einem Arbeitsmodul zum Empfangen und Verarbeiten von Informationen des Drucksensors einerseits und des Geräuschdetektors andererseits, so dass der Drucksensor beim Anhalten des Fahrzeugs im Betrieb "ökonomisch" arbeitet und der Drucksensor beim Starten des Fahrzeugs im Betrieb "normal" arbeitet.

2. Reifendrucküberwachungssystem nach Anspruch 1, bei dem der Geräuschdetektor vom piezoelektrischen Typ ist.

3. Reifendrucküberwachungssystem nach Anspruch 2, bei dem der Geräuschdetektor außerdem ein Druckänderungsdetektor ist.

4. Reifendrucküberwachungssystem nach einem der Ansprüche 1 bis 3, bei dem der Geräuschdetektor auf Geräusche reagiert, die auf Grund einer Drehbewegung eines Rades entstehen, mit dem er zusammenhängt.

5. Reifendrucküberwachungssystem nach einem der Ansprüche 1 bis 3, bei dem der Geräuschdetektor auf Geräusche reagiert, die durch den Motor des Fahrzeugs entstehen.

6. Reifendrucküberwachungssystem nach einem der Ansprüche 1 bis 5, bei dem der Betrieb "ökonomisch" derjenige ist, in dem das Zeitintervall zwischen Messvorgängen des Drucksensors wesentlich länger als im Betrieb "normal" ist.

7. Reifendrucküberwachungssystem nach einem der Ansprüche 1 bis 6, bei dem beim Übergang aus dem Betrieb "ökonomisch" in den Betrieb "normal" eine Übergangsperiode des Messbetriebs "beschleunigt" vorgesehen ist, während der das Zeitintervall zwischen Messvorgängen des Drucksensors wesentlich kürzer als im Betrieb "normal" ist.

## Claims

1. A tyre pressure monitoring system, comprising:
• a pressure measuring sensor in fluid communication with the ambient pressure of the tyre;
• a noise detector, capable of detecting the noise produced by the vehicle when it is started;
• a management module, capable of receiving and processing information provided by the pressure sensor on the one hand and on the other hand by the noise detector such that, when the vehicle is at a standstill, the pressure sensor functions in "economy" mode; when the vehicle is moving, the pressure sensor operates in "normal" mode.

2. A tyre pressure monitoring system according to claim 1, in which the noise detector is of the piezoelectric type.

3. A tyre pressure monitoring system according to claim 2, in which the noise detector is also a pressure change detector.

4. A tyre pressure monitoring system according to one of claims 1 to 3, in which the noise detector is sensitive to the noises produced by angular displacement of a wheel with which it is associated.

5. A tyre pressure monitoring system according to one of claims 1 to 3, in which the noise detector is sensitive to the noises produced by the engine of the vehicle.

6. A tyre pressure monitoring system according to one of claims 1 to 5, in which the "economy" mode is that in which the interval between the measurements carried out by the pressure sensor is substantially longer than in "normal" mode.

7. A tyre pressure monitoring system according to one of claims 1 to 6, in which, when the operating mode changes from "economy" to "normal", there is provided a transitional period of operation in "accelerated" measurement mode, in which the interval between the measurements effected by the pressure sensor is substantially shorter than in "normal" mode.
